# EUROPEAN PATENT SPECIFICATION

(11) **EP 3 105 286 B1**
(45) Date of publication and mention of the grant of the patent: **11.04.2018**
(21) Application number: 15703279.8
(22) Date of filing: 09.02.2015
(51) Int. Cl.: C08K 5/14

(54) **PROCESS FOR CURING (METH)ACRYLATE-CONTAINING UP OR VE RESIN**
VERFAHREN ZUM HÄRTEN VON (METH)ACRYLATHALTIGEM UP- ODER VE-HARZ
PROCÉDÉ DE DURCISSEMENT DE (MÉTH)ACRYLATE CONTENANT DE LA RÉSINE POLYESTER NON SATURÉE OU DE LA RÉSINE VINYLESTER

(30) Priority: 11.02.2014 EP 14154599
(43) Date of publication of application: 21.12.2016
(73) Proprietor: Akzo Nobel Chemicals International B.V., 6824 BM Arnhem (NL)
(72) Inventor: ZUIJDERDUIN, Albert Roland, 8501 MR Joure (NL); REIJNDERS, Johannes Martinus Gerardus Maria, 8162 ED Epe (NL); TER BRAKE, Maaike Anne Gertrud, 7577 MD Oldenzaal (NL); TALMA, Auke Gerardus, 7437 PM Bathmen (NL); STEENSMA, Maria, 6824 NN Arnhem (NL)
(74) Representative: Akzo Nobel Chemicals IP Group
(86) International application number: PCT/EP2015/052568
(87) International publication number: WO 2015/121178

(56) References cited:
- WO-A1-2011/157673
- WO-A1-2012/126919
- WO-A2-2007/008743

## Description

Unsaturated polyester (UP) resins and vinyl ester (VE) resins are conventionally cured via a redox system, using a peroxide and a transition metal salt. The most frequently used peroxide for this type of application is methyl ethyl ketone peroxide (MEKP). The most frequently used transition metal is cobalt, which is generally used in the form of its 2-ethylhexanoate salt, also referred to as cobalt octoate.
UP and VE resins generally comprise a reactive diluent, conventionally styrene, in order to lower the viscosity of the uncured resin and to serve as crosslinking agent.

Two environmental and legislative problems have arisen with the conventional curing procedure: legislation requires reduction of the amount of cobalt in view of its reproductive toxicity and expected carcinogenicity and also styrene may face legislative measures and exposure restrictions.

As a result, there is a desire for the provision of Co-free and styrene-free curing systems.
Examples of prior art documents disclosing styrene-containing Co-free systems are WO 2008/003492, WO 2012/126917 and WO 2011/157673. The metals used in the accelerator systems according to these documents - instead of Co - include Mn, Cu, and Fe.

An example of a prior art document disclosing a styrene-free system is WO 2010/108939. Reactive diluents that can be used instead of styrene are, amongst others, (meth)acrylates.
Unfortunately, curing such (meth)acrylate systems with the conventional peroxide - methyl ethyl ketone peroxide - leads to very low reactivity and/or incomplete cure. Such disappointing results are obtained in the presence of all the above transition metals, including cobalt.

It is therefore an object of the present invention to improve the reactivity and mechanical properties of (meth)acrylate-diluted UP and VE resins.

This object has been met by using a peroxide selected from the group consisting of methyl isopropyl ketone peroxide, methyl isobutyl ketone peroxide, cyclohexanone peroxide, and combinations thereof.

In addition, it has been found that instead of (meth)acrylates, also (meth)acrylic acid and (meth)acrylamides can be used in this process.

The invention therefore relates to a process for curing an unsaturated polyester resin or vinyl ester resin, the resin comprising a reactive diluent selected from the group consisting of acrylic acid, methacrylic acid, acrylates, methacrylates, acrylamides, methacrylamides, and combinations thereof, said process comprising the addition to said resin of (i) a peroxide selected from the group consisting of methyl isopropyl ketone peroxide, methyl isobutyl ketone peroxide, cyclohexanone peroxide, and combinations thereof and (ii) a compound of a transition metal selected from the group consisting of Mn, Fe, and Cu, and combinations thereof.
The invention also relates to a radically curable resin composition comprising (i) an unsaturated polyester resin or vinyl ester resin, (ii) a peroxide selected from the group consisting of methyl isopropyl ketone peroxide, methyl isobutyl ketone peroxide, cyclohexanone peroxide, and combinations thereof, (iii) a compound of a transition metal selected from the group consisting of Mn, Fe, and Cu, and combinations thereof, and (iv) a reactive diluent selected from the group consisting of acrylic acid, methacrylic acid, acrylates, methacrylates, acrylamides, methacrylamides, and combinations thereof.

The peroxide to be used in the process of the present invention is methyl isopropyl ketone peroxide (MIPKP), methyl isobutyl ketone peroxide (MIBKP), cyclohexanone peroxide (CYHP), or a combination thereof. This peroxide can have the formula 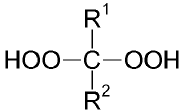 or the formula

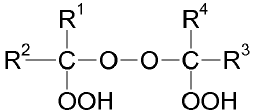

These formulae represent methyl isopropyl ketone peroxide when R¹ and R⁴ are methyl and R² and R³ are isopropyl. They represent methyl isobutyl ketone peroxide when R¹ and R⁴ are methyl and R² and R³ are isobutyl. They represent cyclohexanone peroxide when R¹ and R² are linked to form a cyclohexane ring and R³ and R⁴ are linked to form a cyclohexane ring.

The first formula reflects a so-called type-4 (T4) ketone peroxide; the second formula a so-called type-3 (T3) ketone peroxide. Both types are generally present in ketone peroxide formulations, in addition to hydrogen peroxide.

The most preferred ketone peroxide for use in this process is methyl isopropyl ketone peroxide.

The total amount of ketone peroxide selected from the group defined above that is preferably used in the process and present in the curable resin composition of the present invention is 0.03-5 parts by weight (pbw), more preferably 0.15-2.5, most preferably 0.3-1.2 pbw, expressed as weight parts of pure peroxide per 100 parts weight parts of reactive diluent-containing resin.

In addition to the ketone peroxides defined above, one or more additional peroxides may be added to the resin in the process according to the invention. Examples of such additional peroxides are hydrogen peroxide, methyl ethyl ketone peroxide, hydroperoxides, peroxyesters, and peroxycarbonates.

Examples of suitable iron, copper, and manganese compounds are salts and complexes of these metals and combinations of such compounds.
Suitable manganese, copper and iron compounds are their halides, nitrates, sulphates, sulphonates, phosphates, phosphonates, oxides, carboxylates, and complexes of these metals with a ligand. Examples of suitable carboxylates are lactate, 2-ethyl hexanoate, acetate, proprionate, butyrate, oxalate, laurate, oleate, linoleate, palmitate, stearate, acetyl acetonate, octanoate, nonanoate, heptanoate, neodecanoate, or naphthenate. Examples of ligands are pyridine and the tridentate, tetradentate, pentadentate, and hexadentate nitrogen donor ligands disclosed in WO 2011/83309.
Preferred manganese compounds are manganese chloride, nitrate, sulphate, lactate, 2-ethyl hexanoate, octanoate, nonanoate, heptanoate, neodecanoate, naphthenate, and acetate, and the Mn complexes of pyridine, porphirine-based ligands, and of the tridentate, tetradentate, pentadentate, or hexadentate nitrogen donor ligands disclosed in WO 2011/83309. Any one of Mn(II), Mn(III), Mn(IV), and Mn(VII) compounds can be used.

Preferred copper compounds are copper chloride, nitrate, sulphate, lactate, 2-ethyl hexanoate, octanoate, nonanoate, heptanoate, neodecanoate, naphthenate, and acetate. Both Cu(I) and Cu(II) compounds can be used.
Preferred iron compounds are iron chloride, nitrate, sulphate, lactate, 2-ethyl hexanoate, octanoate, nonanoate, heptanoate, neodecanoate, naphthenate, acetate, and iron complexes of pyridine, porphirine-based ligands, or the tridentate, tetradentate, pentadentate, or hexadentate nitrogen donor ligands of WO 2011/83309. Both Fe(II) and Fe(III) can be used. More preferably, it is an iron(II) or iron (III) complex of a tridentate or pentadentate nitrogen donor ligand according to WO 2011/83309.
Preferred nitrogen donor ligands according to WO 2011/83309, for both Mn and Fe, are the bispidon ligands and the TACN-Nx ligands. The preferred bispidon ligand is dimethyl-2,4-di-(2-pyridyl)-3-methyl-7-(pyridin-2-ylmethyl)-3,7-diaza-bicyclo[3.3.1] nonan-9-one-1,5-dicarboxylate (N2py3o-Cl). The preferred TACN-Nx ligand is 1,4,7-trimethyl-1,4,7-triazacyclononane (Me₃-TACN).
The total amount of transition metal to be used in the process and compositions according to the present invention is preferably 0.5-75 mmol/kg reactive diluent-containing resin, more preferably 2-50 mmol/kg, even more preferably 2-25 mmol/kg, and most preferably 2-10 mmol/kg resin.

Suitable UP resins to be cured by the process of the present invention are so-called ortho-resins, iso-resins, iso-npg resins, and dicyclopentadiene (DCPD) resins. Examples of such resins are maleic, fumaric, allylic, vinylic, and epoxy-type resins, bisphenol A resins, terephthalic resins, and hybrid resins.
The term "vinyl ester resin" refers to a resin produced by the esterification of an epoxy resin (e.g. a diglycidyl ether of bisphenol A) with an unsaturated monocarboxylic acid such as a methacrylate, diacrylate, dimethacrylate, or oligomers thereof.

The unsaturated polyester or vinyl ester resin contains a reactive diluent selected from the group consisting of acrylic acid, methacrylic acid, acrylates, methacrylates, acrylamides, methacrylamides, and combinations thereof. In addition thereto, the resin may contain one or more diluents which are not in accordance with this group. In that case, it is however desired to keep the amount of styrene below 2 wt%, based on the weight of reactive diluent-containing resin. Most preferably, styrene is completely absent from the process and the curable resin composition of the present invention.
In a preferred embodiment, all reactive diluents used in the process and the curable composition according to the invention are selected from the above-defined group.

Preferably, the reactive diluent in accordance with the above-mentioned group is selected from the group consisting of acrylates, methacrylates, and combinations thereof. More preferably, the reactive diluent is selected from the group consisting of methyl methacrylate, tert-butylacrylate, glycidyl (meth)acrylate, methylacrylate, diacrylates, dimethacrylates, triacrylates, trimethacrylates, tetra-acrylates, tetramethacrylates, and combinations thereof.
Even more preferably, the reactive diluent in accordance with the above-mentioned group is selected from the group consisting of diacrylates, dimethacrylates, triacrylates, trimethacrylates, tetra-acrylates, tetramethacrylates, and combinations thereof.
Specific examples of di(meth)acrylates are poly(ethyleneglycol) di(meth)acrylates, 1,2-ethanediol di(meth)acrylate, 1,2-propanediol di(meth)acrylate, 1,3-propanediol di(meth)acrylate, 1,5-pentanediol di(meth)acrylate,1,4-butanediol di(meth)acrylate, 1,3-butanediol di(meth)acrylate, 2,3-butanediol di(meth)acrylate, 1,6-hexanediol di(meth)acrylate, diethyleneglycol di(meth)acrylate, triethyleneglycol di(meth)acrylate, glycerol di(meth)acrylate, trimethylolpropane di(meth)acrylate, neopentyl glycol di(meth)acrylate, dipropyleneglycol di(meth)acrylate, tripropyleneglycol di(meth)acrylate, poly(propyleneglycol) di(meth)acrylates, tricyclodecane dimethylol di(meth)acrylate, 1,10-decanediol di(meth)acrylate, and tetraethylene glycol di(meth)acrylate.
An example of a tri(meth)acrylate is trimethylolpropane tri(meth)acrylate.
An example of a tetra(meth)acrylate is pentaerythritol tetra(meth)acrylate.
Examples of (meth)acrylamides are 1,2-ethanediamine di(meth)acrylamide, 1,2-propanediamine di(meth)acrylamide, 1,3-propanediamine di(meth)acrylamide, 1,5-pentanediamine di(meth)acrylamide, 1,4-butanediamine di(meth)acrylamide, 1,3-butanediamine di(meth)acrylamide, 2,3-butanediamine di(meth)acrylamide, 1,6-hexanediamine di(meth)acrylamide, and 1,10-decanediamine di(meth)acrylamide. Most preferred reactive diluents are selected from the group consisting of 1,4-butanediol dimethacrylate, trimethylolpropane tri(meth)acrylate, pentaerythritol tetra(meth)acrylate, and combinations thereof.

In this specification, the term (meth)acrylic acid covers both acrylic acid and methacrylic acid; the term (meth)acrylate covers both acrylate and methacrylate; the term (meth)acrylamide covers both acrylamide and methacrylamide.

The total amount of reactive diluent in the resin is preferably at least 0.1 wt%, based on the weight of reactive diluent-containing unsaturated polyester or vinyl ester resin, more preferably at least 1 wt%, and most preferably at least 5 wt%. The total amount of reactive diluent is preferably not more than 50 wt%, more preferably not more than 40 wt%, and most preferably not more than 35 wt% based on the weight of reactive diluent-containing unsaturated polyester or vinyl ester resin.

What is preferably absent from the process and the curable resin composition of the present invention is an imine of the formula C(R²)(R³)=N-R¹ wherein R¹ is selected from hydrogen, hydroxyl, linear or branched alkyl having 1-22 carbon atoms, cycloalkyl having 3-22 carbon atoms, aryl having 6 to 15 carbon atoms, and aralkyl having 7 to 22 carbon atoms, which alkyl, cycloalkyl, aryl, and aralkyl groups may be optionally substituted with one or more groups containing heteroatoms selected from S, O, P, and/or Si, R² is selected from C(R⁶)(R⁵)-C(=O)-R⁴, -C(R⁶)(R⁵)-C(=S)-R⁴, and -C(R⁶)(R⁵)-C(=N)-R4, wherein R⁴, R⁵, and R⁶ are selected from hydrogen, linear or branched alkyl having 1-6 carbon atoms, cycloalkyl having 3-12 carbon atoms, aryl, aralkyl, alkoxy having 1-6 carbon atoms, and aryloxy, R³ is selected from linear or branched alkyl having 1-22 carbon atoms, cycloalkyl having 3-22 carbon atoms, aryl having 6 to 15 carbon atoms, and aralkyl having 7 to 22 carbon atoms.

The process according to the invention involves the step of contacting the peroxide and the transition metal compound with the reactive diluent-containing UP or VE resin. These materials can be combined in any order. In one embodiment, the reactive diluent-containing resin can be pre-accelerated with the transition metal compound and curing is performed by adding the peroxide either quickly thereafter or days, weeks, or months later. It is also possible to add the peroxide and the transition metal-compound (almost) simultaneously.

The peroxide is preferably added in diluted form, i.e. diluted in a phlegmatizer. The phlegmatizer is preferably selected from phthalates, alkanols, cycloalkanols, alkylene glycols, alkylene glycol monoalkyl ethers, cyclic ether substituted alcohols, cyclic amides, esters, ketones, aromatic solvents, halogenated hydrocarbon solvents, water, and mixtures thereof.

Other compounds that may be present during the process of the invention are alkali or alkaline earth metal compounds, phosphorous-containing compounds, 1,3-diketones, nitrogen-containing bases, and reducing agents.
Examples of 1,3-diketones are acetyl acetone, benzoyl acetone, and dibenzoyl methane, acetoacetates such as methyl acetoacetate, ethyl acetoacetate, propyl acetoacetate, and butylacetoacetate, and acetoacetamides such as diethyl acetoacetamide, dimethyl acetoacetamide, dipropylacetoacetamide, and dibutylaceto-acetamide.
Examples of alkali or alkaline earth metal compounds are alkali or alkaline earth metal carboxylate salts such as the 2-ethyl hexanoates, octanoates, nonanoates, heptanoates, neodecanoates, and naphthenates of alkali metals and alkaline earth metals. A preferred alkali metal is K.
Examples of phorphorous-containing compounds are phosphorous compounds with the formulae P(R)₃ and P(R)₃=O, wherein each R is independently selected from hydrogen, alkyl with 1 to 10 carbon atoms, and alkoxy groups with 1 to 10 carbon atoms. Preferably, at least two R-groups are selected from either alkyl groups of alkoxy groups. Specific examples of suitable phosphorous-containing compounds are diethyl phosphate, dibutyl phosphate, tributyl phosphate, triethyl phosphate (TEP), and dibutyl phosphite.
Examples of nitrogen-containing bases are tertiary amines like triethyl amine, dimethylaniline, diethylaniline, or N,N-dimethyl-p-toludine (DMPT), polyamines like 1,2-(dimethyl amine)ethane, secondary amines like diethyl amine, ethoxylated amines like triethanol amine, dimethylamino ethanol, diethanol amine, or monoethanol amine, and aromatic amines like pyridine, bipyridine, and 2,2'-biquinoline.
Examples of reducing agents are ascorbic acid, sodium formaldehyde sulphoxylate (SFS), reducing sugars like glucose and fructose, oxalic acid, phosphines, phosphites, organic or inorganic nitrites, organic or inorganic sulphites, organic or inorganic sulphides, mercaptanes, and aldehydes, and mixtures thereof. Ascorbic acid, which term in this specification includes L-ascorbic acid and D-isoascorbic acid, is the preferred reducing agent.

Optional additives that may be present in the radically curable composition according to the invention are fillers, fibres, pigments, radical inhibitors, fire retardants, and promoters.
In a preferred embodiment, the radically curable composition comprises a filler and/or a reinforcement fibre. Examples of reinforcement fibres are glass fibres, carbon fibres, aramid fibres (e.g. Twaron®), and natural fibers (e.g. jute, kenaf, industrial hemp, flax (linen), ramie, etc.). The fibres may be in the form of a fabric. Examples of fillers are quartz, sand, aluminium trihydroxide, magnesium hydroxide, chalk, calcium hydroxide, clays, titanium dioxide, and lime.
Fire retardants include both halogen-containing and phosphorous-containing fire retardants.
Examples of radical inhibitors include 2-methoxyphenol, 4-methoxyphenol, 2,6-di-t-butyl-4-methylphenol, 2,6-di-t-butylphenol, 2,4,6-trimethylphenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene, di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone, 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (TEMPOL), 1-oxyl-2,2,6,6-tetramethylpiperidine-4-one (TEMPON), 1-oxyl-2,2,6,6-tetramethyl-4-carboxyl-piperidine (4-carboxy-TEMPO), 1-oxyl-2,2,5,5-tetramethylpyrrolidine, 1-oxyl-2,2,5,5-tetramethyl-3carboxylpyrrolidine (3-carboxy-PROXYL), aluminium-N-nitrosophenyl hydroxylamine, diethylhydroxylamine, phenothiazine, and combinations thereof.

When the reactive diluent-containing UP or VE resin, the peroxide, the transition metal compound, and any optional other ingredients have been combined, these compounds are mixed and dispersed. The curing process can be carried out at any temperature from -15°C up to 250°C. Preferably, it is carried out at ambient temperatures commonly used in applications such as hand lay-up, spray-up, filament winding, resin transfer moulding, coatings (e.g. gelcoat and standard coatings), button production, centrifugal casting, corrugated sheets or flat panels, relining systems, kitchen sinks via pouring compounds, etc. However, it can also be used in SMC, BMC, pultrusion techniques, and the like, for which temperatures up to 180°C, more preferably up to 150°C, most preferably up to 100°C, are used.

The cured composition can be subjected to a post-cure treatment to further optimize the hardness. Such post-cure treatment is generally performed at a temperature in the range 40-180°C for 30 min to 15 hours.

The cured compositions find use in various applications, including marine applications, chemical anchoring, roofing, construction, relining, pipes and tanks, flooring, windmill blades, laminates, polymer concrete, sanitary products, etc.

### EXAMPLES

A commercially available styrene-free unsaturated polyester resin containing butanediol dimethacrylate (BDDMA) as reactive diluent was cured with different peroxides and transition metals (Co, Cu(I), and Cu(II)).
The peroxides used were methyl ethyl ketone peroxide, MEKP (Butanox® M-50 ex AkzoNobel), methyl isopropyl ketone peroxide, MIPKP (Butanox® P-50 ex AkzoNobel), methyl isobutyl ketone peroxide, MIBKP (Trigonox® HMS ex AkzoNobel) and cyclohexanone peroxide, CYHP (Trigonox® 113 ex AkzoNobel) in a concentration of 2 parts by weight per hundred weight parts of reactive diluent-containing resin.
The transition metals were added in the form of accelerator solutions. Cobalt compound was added as Accelerator NL-49P ex AkzoNobel; the Cu(I) compound was added as Nouryact™ CF13 ex AkzoNobel; the Cu(II) compound was added as Nouryact™ CF12 ex AkzoNobel. All acccelerators were dosed at 1 part by weight of metal per hundred weight parts of reactive diluent-containing resin.

Laminate sheets were prepared as follows: a cleaned glass plate was covered with a polyester foil. The reactive diluent-containing resin, the peroxide, and the accelerator solution were thoroughly mixed and spread on the foil surface. Alternating layers of glass fibre reinforcement and resin-containing mixture were applied until a laminate thickness of 4 mm was obtained. The composition was subsequently covered by another polyester foil and enclosed air was removed using a roller. The polyester foil was subsequently covered by a glass plate. The resulting laminate sheets were cured at 20°C.
The hardness of the cured sample was measured after 24 hours with a Barcol 934 hardness meter.

The cure of the compositions was also analyzed by measuring the peak exotherm, the time to peak, and the gel time. A thermocouple was inserted in the middle of the laminate and the time-temperature curve was measured. From the curve the following parameters were calculated:
Gel time (GT) = time in minutes elapsed between the start of the experiment and 5.6°C above the bath temperature.
Time to peak exotherm (TTP) = time elapsed between the start of the experiment and the moment the peak exotherm was reached.
Peak Exotherm (PE) = the maximum temperature that was reached.

**Table 1**

| Example | Peroxide, 2 phr | metal, 1 phr | Gel time (min) | TTP (min) | PE (°C) | Barcol hardness |
|---|---|---|---|---|---|---|
| 1 | MIPKP | Cu(I) | 40 | 66 | 50 | 48 |
| 2 | MIPKP | Cu(II) | 91 | 125 | 31.5 | 37 |
| 3 | MIBKP | Cu(I) | 122 | 166 | 29.3 | 43 |
| 4 | CYHP | Cu(I) | 129 | 151 | 57.4 | 44 |
| 5 | CYHP | Cu(II) | 134 | 159 | 48.0 | 37 |
| 6 (comp) | MIPKP | Co | > 360 | > 360 | 25.2 | 26 |
| 7 (comp) | MEKP | Cu(I) | 173 | 212 | 29.2 | 45 |
| 8 (comp) | MEKP | Cu(II) | 182 | 219 | 28.9 | 30 |
| 9 (comp) | MEKP | Co | > 360 | > 360 | 24.6 | 35 |

It can be seen that the peroxide-metal combinations in experiments 1-5 perform much better in terms of reactivity than the conventional Co/MEKP combination and other combinations with either Co or MEKP.

## Claims

1. Process for curing an unsaturated polyester resin or vinyl ester resin, the resin comprising a reactive diluent selected from the group consisting of acrylic acid, methacrylic acid, acrylates, methacrylates, acrylamides, methacrylamides, and combinations thereof, said process comprising the addition to said resin of (i) a ketone peroxide selected from the group consisting of methyl isopropyl ketone peroxide, methyl isobutyl ketone peroxide, cyclohexanone peroxide, and combinations thereof, and (ii) a compound of a transition metal selected from the group consisting of Mn, Fe, and Cu, and combinations thereof.

2. Process according to claim 1 wherein the ketone peroxide is methyl isopropyl ketone peroxide.

3. Process according to claim 1 wherein the ketone peroxide is methyl isobutyl ketone peroxide.

4. Process according to claim 1 wherein the ketone peroxide is cyclohexanone peroxide.

5. Process according to any one of the preceding claims wherein the transition metal is Cu.

6. Process according to any one of the preceding claims wherein the reactive diluent is selected from the group consisting of acrylates, methacrylates, and combinations thereof.

7. Process according to claim 6 wherein the reactive diluent is selected from the group consisting of methyl methacrylate, tert-butylacrylate, glycidyl acrylate, glycidyl methacrylate, methylacrylate, diacrylates, dimethacrylates, triacrylates, trimethacrylates, tetra-acrylates, tetramethacrylates, and combinations thereof.

8. Process according to claim 7 wherein the reactive diluent is selected from the group consisting of diacrylates, dimethacrylates, triacrylates, trimethacrylates, tetra-acrylates, tetramethacrylates, and combinations thereof.

9. Process according to claim 8 wherein the reactive diluent is selected from the group consisting of poly(ethylene glycol) di(meth)acrylates, 1,2-ethanediol di(meth)acrylate, 1,2-propanediol di(meth)acrylate, 1,3-propanediol di(meth)acrylate, 1,5-pentanediol di(meth)acrylate, 1,4-butanediol di(meth)acrylate, 1,3-butanediol di(meth)acrylate, 2,3-butanediol di(meth)acrylate, 1,6-hexanediol di(meth)acrylate, diethyleneglycol di(meth)acrylate, triethyleneglycol di(meth)acrylate, glycerol di(meth)acrylate, trimethylolpropane di(meth)acrylate, neopentyl glycol di(meth)acrylate, dipropyleneglycol di(meth)acrylate, tripropyleneglycol di(meth)acrylate, poly(propyleneglycol) di(meth)acrylates, tricyclodecane dimethylol di(meth)acrylate, 1,10-decanediol di(meth)acrylate, tetraethylene glycol di(meth)acrylate, trimethylolpropanet ri(meth)acrylate, pentaerythritol tetra(meth)acrylate, glycidyl (meth)acrylate, and combinations thereof.

10. Process according to claim 9 wherein the reactive diluent is selected from the group consisting of 1,4-butanediol dimethacrylate, trimethylolpropane tri(meth)acrylate, pentaerythritol tetra(meth)acrylate, and combinations thereof.

11. Radically curable resin composition comprising (i) an unsaturated polyester resin or vinyl ester resin, (ii) a ketone peroxide selected from the group consisting of methyl isopropyl ketone peroxide, methyl isobutyl peroxide, cyclohexanone peroxide, and combinations thereof, (iii) a compound of a transition metal selected from the group consisting of Mn, Fe, and Cu, and combinations thereof, and (iv) a reactive diluent selected from the group consisting of acrylic acid, methacrylic acid, acrylates, methacrylates, acrylamides, methacrylamides, and combinations thereof.

12. Radically curable resin composition according to claim 11 wherein the reactive diluent is selected from the group consisting of methyl methacrylate, tert-butylacrylate, methylacrylate, glycidyl acrylate, glycidyl methacrylate, diacrylates, dimethacrylates, triacrylates, trimethacrylates, tetra-acrylates, tetramethacrylates, and combinations thereof.

13. Radically curable resin composition according to claim 12 wherein the reactive diluent is selected from the group consisting of diacrylates, dimethacrylates, triacrylates, trimethacrylates, tetra-acrylates, tetramethacrylates, and combinations thereof.

14. Radically curable resin composition according to claim 13 wherein the reactive diluent is selected from the group consisting of poly(ethylene glycol) di(meth)acrylates, 1,2-ethanediol di(meth)acrylate, 1,2-propanediol di(meth)acrylate, 1,3-propanediol di(meth)acrylate, 1,5-pentanediol di(meth)acrylate, 1,4-butanediol di(meth)acrylate, 1,3-butanediol di(meth)acrylate, 2,3-butanediol di(meth)acrylate, 1,6-hexanediol di(meth)acrylate, diethyleneglycol di(meth)acrylate, triethyleneglycol di(meth)acrylate, glycerol di(meth)acrylate, trimethylolpropane di(meth)acrylate, neopentyl glycol di(meth)acrylate, dipropyleneglycol di(meth)acrylate, tripropyleneglycol di(meth)acrylate, poly(propyleneglycol) di(meth)acrylates, tricyclodecane dimethylol di(meth)acrylate, 1,10-decanediol di(meth)acrylate, tetraethylene glycol di(meth)acrylate, trimethylolpropane tri(meth)acrylate, pentaerythritol tetra(meth)acrylate, , and combinations thereof.

15. Radically curable resin composition according to claim 14 wherein the reactive diluent is selected from the group consisting of 1,4-butanediol dimethacrylate, trimethylolpropane tri(meth)acrylate, pentaerythritol tetra(meth)acrylate, and combinations thereof.

## Patentansprüche

1. Verfahren zum Härten eines ungesättigten Polyesterharzes (UP-Harzes) oder Vinylesterharzes (VE-Harzes), wobei das Harz ein reaktives Verdünnungsmittel ausgewählt aus der Gruppe bestehend aus Acrylsäure, Methacrylsäure, Acrylaten, Methacrylaten, Acrylamiden, Methacrylamiden sowie Kombinationen aus diesen umfasst, wobei das Verfahren den Zusatz zu dem Harz von (i) einem Ketonperoxid ausgewählt aus der Gruppe bestehend aus Methylisopropylketonperoxid, Methyl-isobutylketonperoxid, Cyclohexanonperoxid sowie Kombinationen aus diesen und (ii) einer Verbindung eines Übergangsmetalls ausgewählt aus der Gruppe bestehend aus Mn, Fe und Cu sowie Kombinationen aus diesen umfasst.

2. Verfahren nach Anspruch 1, wobei das Ketonperoxid aus Methylisopropylketonperoxid besteht.

3. Verfahren nach Anspruch 1, wobei das Ketonperoxid aus Methyl-isobutylketonperoxid besteht.

4. Verfahren nach Anspruch 1, wobei das Ketonperoxid aus Cyclohexanonperoxid besteht.

5. Verfahren nach einem der vorhergehenden Ansprüche, wobei das Übergangsmetall Cu ist.

6. Verfahren nach einem der vorhergehenden Ansprüche, wobei das reaktive Verdünnungsmittel aus der Gruppe bestehend aus Acrylaten, Methacrylaten und Kombinationen aus diesen ausgewählt ist.

7. Verfahren nach Anspruch 6, wobei das reaktive Verdünnungsmittel aus der Gruppe bestehend aus Methylmethacrylat, tert-Butylacrylat, Glycidylacrylat, Glycidylmethacrylat, Methacrylat, Diacrylaten, Dimethycrylaten, Triacrylaten, Trimethylacrylaten, Tetraacrylaten, Tetramethylacrylaten sowie Kombinationen aus diesen ausgewählt ist.

8. Verfahren nach Anspruch 7, wobei das reaktive Verdünnungsmittel aus der Gruppe bestehend aus Diacrylaten, Dimethacrylaten, Triacrylaten, Trimethacrylaten, Tetraacrylaten, Tetramethacrylaten sowie Kombinationen aus diesen ausgewählt ist.

9. Verfahren nach Anspruch 8, wobei das reaktive Verdünnungsmittel aus der Gruppe bestehend aus Poly(ethylenglycol)-di(meth)acrylaten, 1,2-Ethandiol-di(meth)acrylat, 1,2-Propandiol-di(meth)acrylat, 1,3-Propandiol-di(meth)acrylat, 1,5-Pentandiol-di(meth)acrylat, 1,4-Butandiol-di(meth)acrylat, 1,3-Butandiol-di(meth)acrylat, 2,3-Butandiol-di(meth)acrylat, 1,6-Hexandiol-di(meth)acrylat, Diethylenglycol-di(meth)acrylat, Triethylenglycol-di(meth)acrylat, Glycerin-di(meth)acrylat, Trimethylolpropan-di(meth)acrylat, Neopentylglycol-di(meth)acrylat, Dipropylenglycol-di(meth)acrylat, Tripropylenglycol-di(meth)acrylat, Poly(propylenglycol)-di(meth)acrylaten, Tricyclodecan-Dimethylol-di(meth)acrylat, 1,10-Decandiol-di(meth)acrylat, Tetraethylenglycol-di(meth)acrylat, Trimethylolpropan-tri(meth)acrylat, Pentaerythritol-tetra(meth)acrylat, Glycidyl(meth)acrylat sowie Kombinationen aus diesen ausgewählt ist.

10. Verfahren nach Anspruch 9, wobei das reaktive Verdünnungsmittel aus der Gruppe bestehend aus 1,4-Butandiol-dimethacrylat, Trimethylolpropan-tri(meth)acrylat, Pentaerythritol-tetra(meth)acrylat sowie Kombinationen aus diesen ausgewählt ist.

11. Radikal härtbare Harzzusammensetzung mit (i) einem ungesättigten Polyesterharz oder Vinylesterharz, (ii) einem Ketonperoxid ausgewählt aus der Gruppe bestehend aus Methylisopropylketonperoxid, Methylisobutylperoxid, Cyclohexanonperoxid und Kombinationen aus diesen, (iii) einer Verbindung aus einem Übergangsmetall ausgewählt aus der Gruppe bestehend aus Mn, Fe und Cu sowie Kombinationen aus diesen, und (iv) einem reaktiven Verdünnungsmittel ausgewählt aus der Gruppe bestehend aus Acrylsäure, Methacrylsäure, Acrylaten, Methacrylaten, Acrylamiden, Methacrylamiden sowie Kombinationen aus diesen.

12. Radikal härtbare Harzzusammensetzung nach Anspruch 11, wobei das reaktive Verdünnungsmittel aus der Gruppe bestehend aus Methylmethacrylat, tert-Butylacrylat, Methylacrylat, Glycidylacrylat, Glycidylmethacrylat, Diacrylaten, Dimethycrylaten, Triacrylaten, Trimethacrylaten, Tetraacrylaten, Tetramethacrylaten sowie Kombinationen aus diesen ausgewählt ist.

13. Radikal härtbare Harzzusammensetzung nach Anspruch 12, wobei das reaktive Verdünnungsmittel aus der Gruppe bestehend aus Diacrylaten, Dimethacrylaten, Triacrylaten, Trimethacrylaten, Tetraacrylaten, Tetramethacrylaten sowie Kombinationen aus diesen ausgewählt ist.

14. Radikal härtbare Harzzusammensetzung nach Anspruch 13, wobei das reaktive Verdünnungsmittel aus der Gruppe bestehend aus Poly(ethylenglycol)-di(meth)acrylaten, 1,2-Ethandiol-di(meth)acrylat, 1,2-Propandiol-di(meth)acrylat, 1,3-Propandiol-di(meth)acrylat, 1,5-Pentandiol-di(meth)acrylat, 1,4-Butandiol-di(meth)acrylat, 1,3-Butandiol-di(meth)acrylat, 2,3-Butandiol-di(meth)acrylat, 1,6-Hexandiol-di(meth)acrylat, Diethylenglycol-di(meth)acrylat, Triethylenglycol-di(meth)acrylat, Glycerin-di(meth)acrylat, Trimethylolpropan-di(meth)acrylat, Neopentylglycol-di(meth)acrylat, Dipropylenglycol-di(meth)acrylat, Tripropylenglycol-di(meth)acrylat, Poly(propylenglycol)-di(meth)acrylaten, Tricyclodecan-Dimethylol-di(meth)acrylat, 1,10-Decandiol-di(meth)acrylat, Tetraethylenglycol-di(meth)acrylat, Trimethylolpropan-tri(meth)acrylat, Pentaerythritol-tetra(meth)acrylat sowie Kombinationen aus diesen ausgewählt ist.

15. Radikal härtbare Harzzusammensetzung nach Anspruch 14, wobei das reaktive Verdünnungsmittel aus der Gruppe bestehend aus 1,4-Butandiol-dimethacrylat, Trimethylolpropan-tri(meth)acrylat, Pentaerythritol-tetra(meth)acrylat sowie Kombinationen aus diesen ausgewählt ist.

## Revendications

1. Procédé de durcissement d'une résine de polyester insaturé ou d'une résine de vinylester, la résine comprenant un diluant réactif choisi dans le groupe constitué par l'acide acrylique, l'acide méthacrylique, des acrylates, des méthacrylates, des acrylamides, des méthacrylamides et des combinaisons de ceux-ci, ledit procédé comprenant le fait d'ajouter à ladite résine (i) un peroxyde de cétone choisi dans le groupe constitué par le peroxyde de méthylisopropylcétone, le peroxyde de méthylisobutylcétone, le peroxyde de cyclohexanone et des combinaisons de ceux-ci, et (ii) un composé d'un métal de transition choisi dans le groupe constitué par Mn, Fe, et Cu, et des combinaisons de ceux-ci.

2. Procédé selon la revendication 1, dans lequel le peroxyde de cétone est le peroxyde de méthylisopropylcétone.

3. Procédé selon la revendication 1, dans lequel le peroxyde de cétone est le peroxyde de méthylisobutylcétone.

4. Procédé selon la revendication 1, dans lequel le peroxyde de cétone est le peroxyde de cyclohexanone.

5. Procédé selon l'une quelconque des revendications précédentes dans lequel le métal de transition est Cu.

6. Procédé selon l'une quelconque des revendications précédentes, dans lequel le diluant réactif est choisi dans le groupe constitué par des acrylates, des méthacrylates et des combinaisons de ceux-ci.

7. Procédé selon la revendication 6, dans lequel le diluant réactif est choisi dans le groupe constitué par le méthacrylate de méthyle, le tert-butylacrylate, l'acrylate de glycidyle, le méthacrylate de glycidyle, le méthylacrylate, des diacrylates, des diméthacrylates, des triacrylates, des triméthacrylates, des tétra-acrylates, des tétra-méthacrylates et des combinaisons de ceux-ci.

8. Procédé selon la revendication 7, dans lequel le diluant réactif est choisi dans le groupe constitué par des diacrylates, des diméthacrylates, des triacrylates, des triméthacrylates, des tétra-acrylates, des tétra-méthacrylates et des combinaisons de ceux-ci.

9. Procédé selon la revendication 8, dans lequel le diluant réactif est choisi dans le groupe constitué par des di(méth)acrylates de poly(éthylèneglycol), le di(méth)acrylate de 1,2-éthanediol, le di(méth)acrylate de 1,2-propanediol, le di(méth)acrylate de 1,3-propanediol, le di(méth)acrylate de 1,5-pentanediol, le di(méth)acrylate de 1,4-butanediol, le di(méth)acrylate de 1,3-butanediol, le di(méth)acrylate de 2,3-butanediol, le di(méth)acrylate de 1,6-hexanediol, le di(méth)acrylate de diéthylèneglycol, le di(méth)acrylate de triéthylèneglycol, le di(méth)acrylate de glycérol, le di(méth)acrylate de triméthylolpropane, le di(méth)acrylate de néopentylglycol, le di(méth)acrylate de dipropylèneglycol, le di(méth)acrylate de tripropylèneglycol, des di(méth)acrylates de poly(propylèneglycol), le di(méth)acrylate de tricyclodécane diméthylol, le di(méth)acrylate de 1,10-décanediol, le di(méth)acrylate de tétraéthylèneglycol, le tri(méth)acrylate de triméthylolpropane, le tétra(méth)acrylate de pentaérythritol, le (méth)acrylate de glycidyle et des combinaisons de ceux-ci.

10. Procédé selon la revendication 9, dans lequel le diluant réactif est choisi dans le groupe constitué par le diméthacrylate de 1,4-butanediol, le tri(méth)acrylate de triméthylolpropane, le tétra(méth)acrylate de pentaérythritol et des combinaisons de ceux-ci.

11. Composition de résine durcissable par voie radicalaire comprenant (i) une résine de polyester insaturé ou une résine de vinylester, (ii) un peroxyde de cétone choisi dans le groupe constitué par le peroxyde de méthylisopropylcétone, le peroxyde de méthylisobutyle, le peroxyde de cyclohexanone et des combinaisons de ceux-ci, (iii) un composé d'un métal de transition choisi dans le groupe constitué par Mn, Fe et Cu et des combinaisons de ceux-ci, et (iv) un diluant réactif choisi dans le groupe constitué par l'acide acrylique, l'acide méthacrylique, des acrylates, des méthacrylates, des acrylamides, des méthacrylamides et des combinaisons de ceux-ci.

12. Composition de résine durcissable par voie radicalaire selon la revendication 11, dans laquelle le diluant réactif est choisi dans le groupe constitué par le méthacrylate de méthyle, le tert-butylacrylate, le méthacrylate, l'acrylate de glycidyle, le méthacrylate de glycidyle, des diacrylates, des diméthacrylates, des triacrylates, des triméthacrylates, des tétra-acrylates, des tétra-méthacrylates et des combinaisons de ceux-ci.

13. Composition de résine durcissable par voie radicalaire selon la revendication 12, dans laquelle le diluant réactif est choisi dans le groupe constitué par des diacrylates, des diméthacrylates, des triacrylates, des triméthacrylates, des tétra-acrylates, des tétraméthacrylates, et des combinaisons de ceux-ci.

14. Composition de résine durcissable par voie radicalaire selon la revendication 13, dans laquelle le diluant réactif est choisi dans le groupe constitué par des di(méth)acrylates de poly(éthylèneglycol), le di(méth)acrylate de 1,2-éthanediol, le di(méth)acrylate de 1,2-propanediol, le di(méth)acrylate de 1,3-propanediol, le di(méth)acrylate de 1,5-pentanediol, le di(méth)acrylate de 1,4-butanediol, le di(méth)acrylate de 1,3-butanediol, le di(méth)acrylate de 2,3-butanediol, le di(méth)acrylate de 1,6-hexanediol, le di(méth)acrylate de diéthylèneglycol, le di(méth)acrylate de triéthylèneglycol, le di(méth)acrylate de glycérol, le di(méth)acrylate de triméthylolpropane, le di(méth)acrylate de néopentylglycol, le di(méth)acrylate de dipropylèneglycol, le di(méth)acrylate de tripropylèneglycol, des di(méth)acrylates de poly(propylèneglycol), le di(méth)acrylate de tricyclodécane diméthylol, le di(méth)acrylate de 1,10-décanediol, le di(méth)acrylate de tétraéthylèneglycol, le tri(méth)acrylate de triméthylolpropane, le tétra(méth)acrylate de pentaérythritol, et des combinaisons de ceux-ci.

15. Composition de résine durcissable par voie radicalaire selon la revendication 14, dans laquelle le diluant réactif est choisi dans le groupe constitué par le diméthacrylate de 1,4-butanediol, le tri (méth)acrylate de triméthylolpropane, le tétra(méth)acrylate de pentaérythritol et des combinaisons de ceux-ci.
